# EUROPEAN PATENT SPECIFICATION

(11) **EP 4 220 761 B1**
(45) Date of publication and mention of the grant of the patent: **19.08.2026**
(21) Application number: 23153177.3
(22) Date of filing: 25.01.2023
(51) Int. Cl.: H01M 4/24, H01M 4/36, H01M 4/38, H01M 4/48, H01M 4/583

(54) **NEGATIVE ACTIVE MATERIAL FOR ALL SOLID-STATE BATTERY**
NEGATIVES AKTIVMATERIAL FÜR FESTKÖRPERBATTERIE
MATÉRIAU ACTIF NÉGATIF POUR BATTERIE ENTIÈREMENT À SEMI-CONDUCTEURS

(30) Priority: 27.01.2022 KR 20220012705
(43) Date of publication of application: 02.08.2023
(73) Proprietor: Samsung SDI Co., Ltd., Yongin-si, Gyeonggi-do 17084 (KR)
(72) Inventor: Shin, Hyuksoo, 17084 Yongin-si, Gyeonggi-do (KR); Noh, Sunghyun, 17084 Yongin-si, Gyeonggi-do (KR); Han, Sangil, 17084 Yongin-si, Gyeonggi-do (KR); Kim, Jinkyu, 17084 Yongin-si, Gyeonggi-do (KR); Yang, Jinhoon, 17084 Yongin-si, Gyeonggi-do (KR); Cho, Byeonggyu, 17084 Yongin-si, Gyeonggi-do (KR)
(74) Representative: Gulde & Partner

(56) References cited:
- CN-A- 113 782 716
- WU JUNXIONG ET AL: "Sodiophilically Graded Gold Coating on Carbon Skeletons for Highly Stable Sodium Metal Anodes", vol. 16, no. 40, 2 September 2020 (2020-09-02), Hoboken, USA, pages 2003815, XP093050523, ISSN: 1613-6810, Retrieved from the Internet <URL:https://onlinelibrary.wiley.com/doi/full-xml/10.1002/smll.202003815> DOI: 10.1002/smll.202003815

## Description

### BACKGROUND OF THE INVENTION

### (a) Field of the Invention

It relates to a negative active material for an all solid-state battery.

### (b) Description of the Related Art

Recently, with the rapid spread of electronic devices such as mobile phones, laptop computers, and electric vehicles using batteries, the demand for small, lightweight, and relatively high-capacity rechargeable batteries is rapidly increasing. Particularly, a rechargeable lithium battery has recently drawn attention as a driving power source for portable devices, as it has lighter weight and high energy density. Accordingly, researches for improving performances of rechargeable lithium batteries are actively studied.

Among rechargeable lithium batteries, an all solid-state battery refers to a battery in which all materials are solid, and particularly, a battery using a solid electrolyte. As a method of increasing the energy density of the all solid-state battery, there is a method of using a lithium metal as a negative electrode. However, this causes expansion of volume of lithium and irreversibly generates dendrites during charging and discharging.

For example, CN 113782716 A discloses a negative electrode material for a zinc secondary battery and a preparation method of the negative electrode material. The negative electrode material is of a core-shell structure, the core is zinc oxide, and the shell is amorphous carbon uniformly embedded with metal nanoparticles; the metal nanoparticles are composed of M1, M2 and M3, wherein M1 is at least one of Bi and Sn, M2 is at least one of In and Ag, and M3 is at least one of Hg, Pb and Cd. J. Wu et al. (Small, Vol. 16, no. 40, 2 September 2020, p.2003815) describes a 3D carbon foam for a sodium (Na) battery which is sputter-coated with gold nanoparticles (Au/CF), forming a fractional gradient through its thickness. The highly porous Au/CF host is proven to have gradually varying sodiophilicity, which in turn facilitates initially preferential Na deposition on the gold-rich region in a "bottom up growth" mode, leading to uniform plating over the entire Au/CF host.

In order to solve such problems, there have been attempts to prepare a negative electrode from deposition of lithium on a negative current collector without using lithium metal itself, but it severely causes low power characteristics and short-circuits.

The above information disclosed in this Background section is only for enhancement of understanding of the background of the invention, and therefore it may contain information that does not form the prior art that is already known in this country to a person of ordinary skill in the art.

### SUMMARY OF THE INVENTION

The invention is defined by the appended claims.

One embodiment provides a negative active material for an all solid-state battery exhibiting excellent cycle-life characteristics and power characteristics and a preparation method thereof.

Another embodiment provides an all solid-state battery including the negative active material.

Another embodiment provides an all solid-state battery including: a negative electrode including a current collector and a negative electrode layer on one side of the current collector; a positive electrode; and a solid electrolyte between the negative electrode and the positive electrode, wherein the negative electrode layer includes the negative active material.

The solid electrolyte may be a sulfide-based solid electrolyte.

The solid electrolyte may be LiₐM_{b}P_{c}S_{d}Aₑ (where a, b, c, d, and e are all 0 or more and 12 or less, M is Ge, Sn, Si, or a combination thereof, and A is one of F, Cl, Br, or I).

The negative electrode may further include a lithium deposition layer, after charging. The lithium deposition layer may have a thickness of about 10 µm to about 50 µm.

The negative active material for an all solid-state battery according to one embodiment may exhibit excellent cycle-life characteristic and power characteristics.

### BRIEF DESCRIPTION OF THE DRAWINGS

FIG. 1 is a drawing showing a preparation of the negative active material for an all solid-state battery according to one embodiment.
FIG. 2 is a schematic diagram schematically illustrating charge and discharge state of the all solid-state battery according to one embodiment.
FIG. 3 shows SEM images of the negative active materials of Example 1 and Comparative Example 1.
FIG. 4 is a graph showing the cycle-life characteristics and coulomb efficiency of the all solid-state battery according to Example 1 and Comparative Example 1.

### DETAILED DESCRIPTION OF THE INVENTION

Hereinafter, embodiments of the present invention are described in detail. However, these embodiments are merely examples, the present invention is not limited thereto, and the present invention is defined by the scope of the claims.

In the present invention, "particle size" or "a particle diameter", are an average particle diameter. Unless otherwise defined in the specification, the average particle diameter are defined as an average particle diameter D50 indicating the diameter of particles having a cumulative volume of 50 volume % in the particle size distribution, and may be measured by a PSA (particle size analyzer). The average particle size (D50) may be measured by, for example, electron microscope observation such as by using a scanning electron microscopic (SEM), field emission scanning electron microscopy (FE-SEM), or a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50 % standard of particle distribution in the measuring device.

The average particle diameter (D50) of the nanoparticles may be measured by dynamic light scattering (DLS). The method may be performed according to ISO 22412. A mean particle size result of polydisperse samples is determined by peak analysis of the particle size distribution graph. The median D50 is the value separating the higher half of the data from the lower half. It is the determined particle size from which half of the particles are smaller and half are larger. According to the IUPAC definition, the equivalent diameter of a non-spherical particle is equal to a diameter of a spherical particle that exhibits identical properties to that of the investigated non-spherical particle.

The negative active material for the all solid-state battery according to the present invention includes an aggregated material of amorphous carbon having pores, wherein the porous amorphous carbon material is obtained by aggregation of primary particles of the amorphous carbon to form secondary particles with a porosity suitable for absorption of the metal nanoparticles. The amorphous carbon material has pores inside, and the metal nanoparticles are filled in the pores.

According to the invention, the negative active material includes an aggregated material of amorphous carbon including pores therein and metal nanoparticles positioned in the pores; and the aggregated material where primary particles of the amorphous carbon are aggregated.

The absorption (or filling) of the metal nanoparticles in the pores inside the aggregation material of amorphous carbon may allow maintaining of a stable interface of the carbon-based aggregation material and metal nanoparticles, thereby improving power characteristics. Furthermore, the metal nanoparticles are filled in the pores positioned inside the aggregated material carbon-based, and thus, the physical movement of the metal may be suppressed during repeated charging and discharging, thereby improving the cycle-life characteristics.

The metal of the metal nanoparticles is at least one of Ag, Au, Sn, Zn, Al, Mg, Ge, Cu, In, Ni, Bi, Pt, and Pd. Preferably, the metal of the metal nanoparticles is a precious metal selected from the group of Ag, Au, Pt, and Pd. In particular, the metal nanoparticles may be formed of Ag. The inclusion of the metal nanoparticles in the negative active material may further improve the electrical conductivity of the negative electrode.

An average particle size D50 of the metal nanoparticles may be 5 nm to 80 nm. When the metal nanoparticles with a nanosize are used, the battery characteristics, for example, cycle-life characteristics of the all solid-state battery, may be improved. If the size of the metal particles is increased to a micrometer unit, the uniformity of the metal particles in the negative electrode layer is reduced to increase a current density at specific areas and to deteriorate the cycle-life characteristics.

In one embodiment, a mixing ratio of the aggregated material of amorphous carbon and the metal nanoparticles may be 99:1 to 70:30 by weight ratio, preferably 80:20 to 70:30 by weight ratio, for example 75:25 by weight ratio. When the mixing ratio of the aggregated material of amorphous carbon and the metal nanoparticles falls in the range, a lithium deposition layer generated by transferring lithium ions released from the positive active material to the negative electrode may be substantially and mostly formed between the current collector and the negative electrode layer. Accordingly, the shortcomings caused by the deposition of lithium on the surface of the negative electrode layer, such as a short-circuit, a side reaction with the electrolyte, or a crack occurrence on the negative electrode may be effectively prevented.

The amorphous carbon is carbon black, acetylene black, denka black, ketjen black, furnace black, activated carbon, or a combination thereof. An example of the carbon black may be Super P (available from Timcal, Ltd.)

The aggregated material of amorphous carbon is present in the form of a porous particulate material, which may include secondary particles formed by aggregation of primary particles of an aggregated material of amorphous carbon starting material. An average particle diameter D50 of the primary particles may be 20 nm to 100 nm, and an average particle diameter D50 of the secondary particles may be 1 µm to 20 µm measured by SEM.

In one embodiment, a particle diameter of the primary particles may be 20 nm or more, 30 nm or more, 40 nm or more, 50 nm or more, 60 nm or more, 70 nm or more, 80 nm or more, or 90 nm or more, and 100 nm or less, 90 nm or less, 80 nm or less, 70 nm or less, 60 nm or less, 50 nm or less, 40 nm or less, or 30 nm or less.

In one embodiment, a particle diameter of the secondary particles may be 1 µm or more, 3 µm or more, 5 µm or more, 7 µm or more, 10 µm or more, or 15 µm or more, and 20 µm or less, 15 µm or less, 10 µm or less, 7 µm or less, 5 µm or less, or 3 µm or less.

The shape of the primary particle may be spherical, oval, plate-shaped, or a combination thereof. In one embodiment, the shape of the primary particle may be spherical, oval, or a combination thereof. If the shape of the primary particles is not spherical, the above particle diameters refer to the equivalent diameter.

According to one aspect of the invention there is provided a method of preparing a negative active material for an all solid-state battery. The method comprises the steps of:
a) Preparing a mixture of an aggregated material of amorphous carbon and metal nanoparticles; and
b) Heating the mixture to a temperature at which the metal nanoparticles melt.

An all solid-state battery including the negative active material, which is obtained by the above-mentioned process, shows improved battery characteristics, especially an improved capacity and improved cycle-life characteristics. The negative active material is obtained by preparing a mixture of an aggregated material of amorphous carbon and metal nanoparticles and subsequent heat-treatment thereof. During the heat-treatment the metal nanoparticles are melted. It is assumed that the metal nanoparticles are (deeply) embedded into the aggregated material of amorphous carbon during the mixing step. Mechanically mixing may thus enforce absorption of the metal nanoparticles into the aggregated material of amorphous carbon. The metal nanoparticles may be therefore located in pores of the amorphous carbon material before heating. During the subsequent heating step b), the absorbed metal nanoparticles are melted. The composite material obtained from the two starting components after cooling surprisingly showed a significant improvement in battery capacity any cycle-life in tests compared to composite materials for which the heating step to melt the metal nanoparticles was omitted.

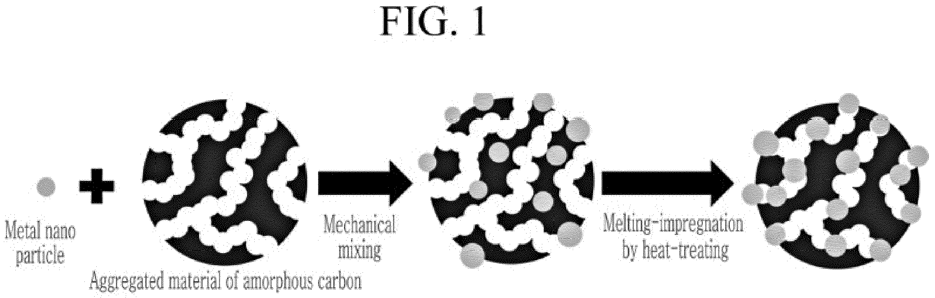

An embodiment of the negative active material preparation process will be illustrated in more detail, referring to FIG. 1.

The process makes use of a porous amorphous carbon material. Said porous amorphous carbon material may be obtained by aggregation of primary particles of an amorphous carbon starting material to form secondary particles. The aggregation may be performed by a general technique such as ball milling and the like, but is not limited thereto. As the secondary particle is prepared by aggregating primary particles, the secondary particles are porous. The porosity of the material and the size of the nanoparticles are matched so that the nanoparticles can penetrate the pores.

The aggregate material of amorphous carbon is mixed with metal nanoparticles such that the metal nanoparticles are absorbed at the surface of the amorphous carbon material also inside the pores. The mixing process may be performed by a mechanical mixing process such as by using a mortar or a Thinky mixer, and the like. In the mixing, a mixing ratio of the aggregated material of amorphous carbon and the metal nanoparticles may be about 99:1 to 70:30 by weight ratio, in particular about 80:20 to 75:25 by weight ratio.

The resulting mixture is heat treated. The heat-treatment is performed at a temperature sufficient to melt the metal nanoparticles, i.e. at a temperature of a melting point or more of the metal nanoparticles. The heat treatment temperature may be a temperature at which amorphous carbon is not crystallized, preferably at a temperature of 1000 °C or less.

If the metal nanoparticle is Ag, as the melting point of elemental Ag which is about 961.8 °C, it may be performed at about 961.8 °C or more and about 1000 °C or less. The melting temperature of metallic nanoparticles is usually below the melting temperature of the elementary metal.

When the heat-treatment is performed in the condition, metal nanoparticles are melted to fill in the pores presented inside of the aggregated material of amorphous carbon.

If the heat-treatment is performed at a temperature of less than of the melting point of the metal nanoparticles, the metal nanoparticles are not sufficiently melted, and thus the filling of the pores in the aggregated material of amorphous carbon is not sufficient. If the heat-treatment is performed at more than about 1000 °C, amorphous carbon is crystallized to cause intercalation of lithium ions, and resultantly, the coulomb efficiency and high-rate capability characteristics may be deteriorated.

The heat-treatment may be performed under an atmosphere such as a nitrogen atmosphere, an argon atmosphere, or a combination thereof. The heat treatment may be performed for 10 hours to 20 hours.

According to the heat-treatment, the metal nanoparticles are melted to fill the pores presented inside of the aggregated material of amorphous carbon, and thus, the metal nanoparticles are substantially and rarely presented on the surface of the final negative active material, that is, the surface of the aggregated material of amorphous carbon.

When mixing the metal nanoparticles and the amorphous carbon at about 30:70 to 1:99 by weight ratio, preferably 30:70 to 20:80 by weight ratio, for example 25:75by weight ratio, substantially all of the pores in the aggregated material of amorphous carbon are not filled with metal nanoparticles, and some may remain in the form of pores (i.e. empty pores).

Another embodiment provides an all solid-state battery including the negative active material.

The all solid-state battery includes a negative electrode including a current collector and a negative electrode layer positioned on one side of the current collector, a positive electrode including a current collector and a positive active material layer positioned on one side of the current collector, and a solid electrolyte between the positive electrode and the negative electrode. Herein, the negative electrode layer includes the before mentioned negative active material.

An amount of the negative active material in the negative active material layer may be 60 wt% to 99 wt% based on the total, 100 wt%, of the negative active material layer, or may be 85 wt% to 99 wt%.

The negative electrode layer may further include a butadiene-based rubber and a cellulose-based compound. When the binder includes the butadiene-based rubber and the cellulose-based compound, the dispersibility of the carbon-based material and the metal particle may be improved, excellent adherence may be exhibited, and the structural stability may be improved.

The butadiene rubber may include a substituted alkylene structural unit and a structural unit derived from butadiene, and specifically, styrene butadiene rubber (SBR), nitrile butadiene rubber (NBR), acrylate butadiene rubber (ABR), methacrylate butadiene rubber, acrylonitrile-butadiene-styrene rubber (ABS), styrene-butadiene-styrene rubber (SBS), and a combination thereof.

The substituted alkylene structural unit may be derived from a substituted or unsubstituted styrene-based monomer, and an example of the substituted or unsubstituted styrene-based monomer may be styrene, α-methylstyrene, 3-methylstyrene, 4-methylstyrene, 2,4-dimethylstyrene, 2,5-dimethylstyrene, 2-methyl-4-chlorostyrene, 2,4,6-trimethylstyrene, cis-β-methylstyrene, trans-β-methylstyrene, 4-methyl-α-methylstyrene, 4-fluoro-α-methylstyrene, 4-chloro-α-methylstyrene, 4-bromo-α-methylstyrene, 4-t-butylstyrene, 2-fluorostyrene, 3-fluorostyrene, 4-fluorostyrene, 2,4-difluorostyrene, 2,3,4,5,6-pentafluorostyrene, 2-chlorostyrene, 3-chlorostyrene, 4-chlorostyrene, 2,4-dichlorostyrene, 2,6-dichlorostyrene, octachlorostyrene, 2-bromostyrene, 3-bromostyrene, 4-bromostyrene, 2,4-dibromostyrene, α-bromostyrene, β-bromostyrene, or a combination thereof.

In another embodiment, the substituted alkylene structural unit may be derived from a substituted or unsubstituted nitrile-based monomer, and an example of the substituted or unsubstituted nitrile-based monomer may be acrylonitrile, methacrylonitrile, fumaronitrile, α-chloronitrile, α-cyanoethyl acrylonitrile, or a combination thereof.

The structural unit derived from butadiene may be a structural unit derived from a butadiene monomer, and an example of the butadiene monomer may be 1,3-butadiene, isoprene, 2,3-dimethyl-1,3-butadiene, 2-ethyl-1,3-butadiene, or a combination thereof.

The cellulose-based compound may be carboxyl alkyl cellulose, salts thereof, or a combination thereof. The alkyl of the carboxyl alkyl cellulose may be a lower alkyl, such as a C1 to C6 alkyl, a linear alkyl or a branched alkyl. The salts of the cellulose-based compound may be alkali salts, such as Na, Li, or a combination thereof.

The cellulose-based compound imparts high viscosity and good applicability and simultaneous improvement of adhesion, thereby preventing separation of the negative electrode layer from the current collector and providing excellent cycle-life characteristics. The alky of the carboxyl alkyl cellulose is a lower alkyl, and thus such a carboxyl alkyl cellulose has high water-solubility to suitably fabricate a water-based electrode.

The butadiene-based rubber and the cellulose-based compound may be included in the negative electrode layer at a 1:1 to 6:1 weight ratio. A weight of the butadiene-based rubber may be, based on the cellulose-based compound, about 1.1 or more, about 1.2 or more, about 1.3 or more, about 1.4 or more, about 1.5 or more, about 1.6 or more, about 1.7 or more, about 1.8 or more, about 1.9 or more, about 2.0 or more, about 2.1 or more, about 2.2 or more, about 2.3 or more, about 2.4 or more, about 2.5 or more, about 2.6 or more, about 2.7 or more, about 2.8 or more, about 2.9 or more, or about 3.0 or more and about 5 or less, about 4.9 or less, about 4.8 or less, about 4.7 or less, about 4.6 or less, about 4.5 or less, about 4.4 or less, about 4.3 or less, about 4.2 or less, about 4.1 or less, about 4.0 or less, about 3.9 or less, about 3.8 or less, about 3.7 or less, about 3.6 or less, about 3.5 or less, about 3.4 or less, about 3.3 or less, about 3.2 or less, about 3.1 or less, or about 3.0 or less. In one embodiment, the weight ratio of the butadiene-based rubber and the cellulose-based compound may be about 1:1 to 5:1 or about 1:1 to 6:1.

When the butadiene-based rubber and the cellulose-based compound are included at the weight ratio, the binder may impart suitable flexibility to the negative electrode layer, thereby inhibiting cracking of the negative electrode layer and increasing the adhesion of the surface of the negative electrode layer. On the other hand, if the butadiene-based rubber and the cellulose-based compound are included out of the range, the rigidity of the negative electrode may be deteriorated.

An amount of the binder may be 1 wt% to 40 wt% based on the total, 100 wt%, of the negative electrode layer. The amount of the binder may be, based on the total, 100 wt% of the negative electrode layer, about 1 wt% to about 15 wt%, and for example, about 1 wt% or more, about 2 wt% or more, about 3 wt% or more, about 4 wt% or more, about 5 wt% or more, about 6 wt% or more, about 7 wt% or more, about 8 wt% or more, about 9 wt% or more, about 10 wt% or more, about 11 wt% or more, about 12 wt% or more, about 13 wt% or more, or about 14 wt% or more, and about 15 wt% or less, about 14 wt% or less, about 13 wt% or less, about 12 wt% or less, about 11 wt% or less, about 10 wt% or less, about 9 wt% or less, about 8 wt% or less, about 7 wt% or less, about 6 wt% or less, about 5 wt% or less, about 4 wt% or less, about 3 wt% or less, or about 2 wt% or less.

When the binder is included in the negative electrode of the all solid-state battery at the weight range, the electrical resistance and the adhesion may be improved, and thus the characteristics (battery capacity and power characteristics) of the all solid-state battery may be improved.

The negative electrode may further include the negative active material and the binder, as well as, for example, additives such as a conductive material, a filler, a dispersing agent, and an ionic conductive material. The conductive material in the negative electrode layer, may be, for example, graphite, carbon black, acetylene black, ketjen black, carbon fiber, metal powder, and the like. As the filler, the dispersing agent, the ionic conductive material included in the negative electrode layer, and well-known materials generally used for the all solid-state battery may be used.

The current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

A solid electrolyte included in the solid electrolyte layer may be sulfide-based solid electrolyte, and for example, an argyrodite-type sulfide-based solid electrolyte. The sulfide-based solid electrolyte may be suitable, as it may exhibit better electrochemical characteristics within wider operation temperature ranges and good ionic conductivity compared to other solid electrolytes such as an oxide-based solid electrolyte, etc.

In one embodiment, the solid electrolyte may be LiₐM_{b}P_{c}S_{d}Aₑ (where a, b, c, d, and e are each an integer of 0 or more, and 12 or less, M is Ge, Sn, Si, or a combination thereof, and A is one of F, Cl, Br, and I), and more specifically, Li₃PS₄, Li₇P₃S₁₁, or Li₆PS₅Cl.

Such a sulfide-based solid electrolyte may be prepared, for example, by a fusion quenching process or mechanical milling using starting materials such as Li₂S, P₂S₅, or the like. After the treating, a heat treatment may be performed. The solid electrolyte may be amorphous, crystalline, or a combination thereof.

The sulfide-based solid electrolyte may be a commercial solid electrolyte.

The solid electrolyte layer may further include a binder. The binder may be styrene butadiene rubber, nitrile butadiene rubber, polytetrafluoroethylene, polyvinylidene fluoride, polyethylene, an acrylate-based polymer, or a combination thereof, and may be any material which is generally used in the related art. The acrylate-based polymer may be butyl acrylate, polyacrylate, polymethacrylate, or a combination thereof.

The solid electrolyte layer may be prepared by adding a solid electrolyte to a binder solution, coating it on a substrate film, and drying it. The binder solution may include isobutylyl isobutyrate, xylene, octyl acetate, or a combination thereof, as a solvent. The solid electrolyte layer preparation is widely known in the art, so a detailed description thereof will be omitted in the specification.

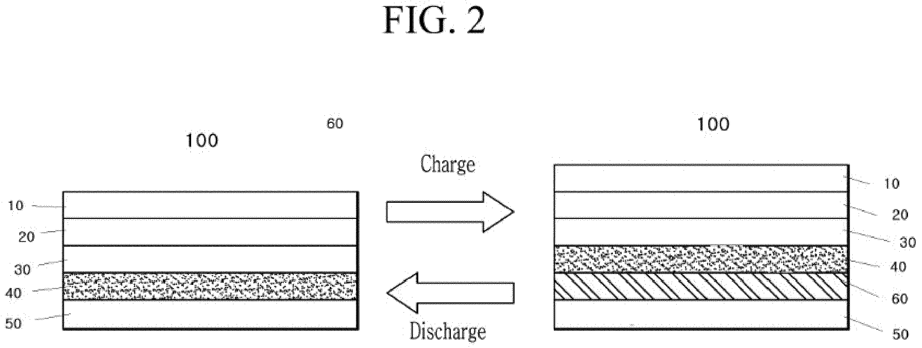

As shown in FIG. 2, when the all solid battery is charged, lithium ions are released from a positive active material and pass through the solid electrolyte to move to the negative electrode, and thus, elemental lithium is deposited next to the negative current collector to form a lithium deposition layer. That is, the lithium deposition layer is formed between the negative current collector and the negative active material layer.

The charging may be a formation process which may be performed at about 0.05 C to about 1 C at about 25 °C to about 50 °C once to three times.

The lithium deposition layer may have a thickness of about 10 µm to about 50 µm. For example, the thickness of the lithium deposition layer may be about 10 µm or more, about 20 µm or more, about 30 µm or more, or about 40 µm or more, and about 50 µm or less, about 40 µm or less, about 30 µm or less, or about 20 µm or less. When the thickness of the lithium deposition layer is satisfied in the range, the lithium is reversibly deposited during charge and discharge, thereby further improving the cycle-life characteristics.

The positive electrode may include a positive current collector and a positive active material layer positioned on one side of the positive current collector.

The positive active material layer may further include a positive active material. The positive active material may include compounds that reversibly intercalate and deintercalate lithium ions (lithiated intercalation compounds). For example, it may include one or more composite oxides of a metal selected from cobalt, manganese, nickel, and a combination thereof, and lithium. Specific examples of the positive active material may be LiₐA_{1-b}B¹_{b}D¹₂ (0.90 ≤ a ≤ 1.8, 0 ≤ b ≤ 0.5); LiₐE_{1-b}B¹_{b}O_{2-c}D¹_{c} (0.90 ≤ a ≤ 1.8, 0 ≤ b ≤ 0.5, 0 ≤ c ≤ 0.5); LiₐE_{2-b}B¹_{b}O_{4-c}D¹_{c} (0.90 ≤ a ≤ 1.8, 0 ≤ b ≤ 0.5, 0 ≤ c ≤ 05); LiₐNi_{1-b-c}Co_{b}B¹_{c}D¹ₐ (0.90 ≤ a ≤ 1.8, 0 ≤ b ≤ 0.5, 0 ≤ c ≤ 0.5, 0 < α ≤ 2); LiₐNi_{1-b-c}Co_{b}B¹_{c}O_{2-α}F¹_{α} (0.90 ≤ a ≤ 1.8, 0 ≤ b ≤ 0.5, 0 ≤ c ≤ 0.5, 0 < α < 2); LiₐNi_{1-b-c}Co_{b}B¹_{c}O_{2-α}F¹₂ (0.90 ≤ a ≤ 1.8, 0 ≤ b ≤ 0.5, 0 ≤ c ≤ 0.5, 0 < α < 2); LiₐNi_{1-b-c}Mn_{b}B¹_{c}D'_{α} (0.90 ≤ a ≤ 1.8, 0 ≤ b ≤ 0.5, 0 ≤ c ≤ 0.5, 0 < α ≤ 2); LiₐNi_{1-b-c}Mn_{b}B'_{c}O_{2-α}F¹_{α} (0.90 ≤ a ≤ 1.8, 0 ≤ b ≤ 0.5, 0 ≤ c ≤ 0.5, 0 < α < 2); LiₐNi_{1-b-c}Mn_{b}B¹_{c}O_{2-α}F¹₂ (0.90 ≤ a ≤ 1.8, 0 ≤ b ≤ 0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ ( 0.90 ≤ a ≤ 1.8, 0.001 ≤ b ≤ 0.1); LiₐCoG_{b}O₂ (0.90 ≤ a ≤1.8, 0.001 ≤ b ≤ 0.1); LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; LiI¹O₂; LiNiVO₄; Li _{(3-f)}J₂(PO₄)₃ (0 ≤ f ≤ 2); Li _{(3-f)}Fe₂(PO₄)₃ (0 ≤ f ≤ 2); or LiFePO₄.

In the chemical formulae, A is selected from Ni, Co, Mn, or a combination thereof; B¹ is selected from Al, Ni, Co, Mn, Cr, Fe, Mg, Sr, V, a rare earth element, or a combination thereof; D¹ is selected from O, F, S, P, or a combination thereof; E is selected from Co, Mn, or a combination thereof; F¹ is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; and J is selected from V, Cr, Mn, Co, Ni, Cu, or a combination thereof.

According to one embodiment, the positive active material may be a three-component-based lithium transition metal oxide such as LiNiₓCo_{y}Al_{z}O₂ (NCA), LiNiₓCo_{y}Mn_{z}O₂ (NCM) (herein, 0<x<1, 0<y<1, 0<z<1, x+y+z=1), etc.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

Furthermore, the coating layer may be any coating materials which are known as a coating layer for the positive active material of the all solid battery, and e.g., may be Li₂O-ZrO₂ (LZO), etc.

When the positive active material includes a three-component-based active material such as NCA or NCM, and includes nickel, the capacity density of the all solid battery may be further improved, and the elution of metal from the positive active material may be further reduced during the charging. Thus, the all solid battery exhibits more improved reliability and cycle-life characteristics in the charge state.

Herein, the shape of the positive active material may be, for example, particle shapes such as a spherical shape and an oval spherical shape. The average particle diameter of the positive active material may not be specifically limited, and may be in any range which may be applied to a positive active material of the conventional all solid-state battery. The amount of the positive active material included in the positive active material layer may not be specifically limited, and may be in any range which may be applied to a positive active material of the conventional all solid-state battery.

The positive active material layer may further include a solid electrolyte. The solid electrolyte included in the positive active material layer may be the aforementioned solid electrolyte, and may be the same as or different from the solid electrolyte included in the solid electrolyte layer. The solid electrolyte may be included in an amount of about 10 wt% to about 30 wt% based on the total weight of the positive active material layer.

The positive current collector may be indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

The positive active material layer may further include additives such as a conductive material, a binder, a filler, a dispersing agent, an ion conductive material, etc., in addition to the aforementioned positive active material and the solid electrolyte.

The filler, the dispersing agent, and the ion conductive material which are included in the positive active material layer may be the same as the additive included in the negative active material layer. Herein an amount of the conductive material may be about 1 wt% to about 10 wt% with reference to the total of 100 wt% of the positive active material layer.

The binder which may be included in the positive active material may be, for example, a styrene butadiene rubber (SBR), polytetrafluoroethylene, polyvinylidene fluoride, polyethylene, etc.

The thickness of the positive active material layer may be about 90 µm to about 200 µm. For example, the thickness of the positive active material layer may be about 90 µm or more, about 100 µm or more, about 110 µm or more, about 120 µm or more, about 130 µm or more, about 140 µm or more, about 150 µm or more, about 160 µm or more, about 170 µm or more, about 180 µm or more, or about 190 µm or more, and about 200 µm or less, about 190 µm or less, about 180 µm or less, about 170 µm or less, about 160 µm or less, about 150 µm or less, about 140 µm or less, about 130 µm or less, about 120 µm or less, or about 110 µm or less. As described above, the thickness of the positive active material layer is greater than the thickness of the negative active material layer, and thus the capacity of the positive electrode is larger than the capacity of the negative electrode.

The positive electrode may be prepared by forming a positive active material layer on a positive current collector using a dry-coating or wet-coating process.

In one embodiment, the all solid-state battery may further include a buffer material for buffering a thickness variation caused from charge and discharge. The buffer material may be positioned between the negative electrode and the positive electrode, or positioned between the one assembly and another assembly of the battery in which at least one electrode assembly is stacked.

The buffer material may be materials having elasticity recovery of about 50 % or more and insulating properties, and specifically, may be silicon rubber, acryl rubber, fluorine-based rubber, nylon, synthetic rubber, or a combination thereof. The buffer material may be a polymer sheet.

FIG. 2 schematically shows states of the all solid-state battery 100 during charging and discharging. The all solid-state battery 100 includes: a positive electrode including a positive current collector 10 and a positive active material layer 20; a negative electrode including a negative current collector 50 and a negative electrode layer 40; and a solid electrolyte 30 between the positive electrode and the negative electrode. When the all solid-state battery 100 is charged, lithium ions are released from a positive active material and deposited to the negative current collector 50, thereby being positioned between the negative current collector 50 and the negative electrode layer 40.

Hereinafter, an example of the present invention and comparative example are described.

### (Example 1)

### (1) Preparation of negative electrode

An aggregated material of carbon black, in which primary particles with an average particle diameter D50 of 30 nm were aggregated to secondary particles having pores inside, was mechanically mixed with Ag nanoparticles with an average particle size D50 of 60 nm at a 75:25 weight ratio using a mortar. The mixture was heat-treated at 980 °C under a nitrogen atmosphere for 12 hours to prepare a composite material which forms the bases of the negative active material.

The composite material, styrene butadiene rubber, and sodium carboxymethyl cellulose were mixed at 100:6:3 by weight ratio in a water solvent to prepare a negative active material slurry.

The prepared slurry was coated on a stainless steel foil current collector and vacuum-dried at 80 °C to prepare a negative electrode having a negative electrode layer with a 12 µm thickness and a current collector with a 10 µm thickness.

### (2) Preparation of solid electrolyte layer

To an argyrodite-type solid electrolyte Li₆PS₅Cl, an isobutylyl isobutyrate binder solution (solid amount: 50 wt%) added with an acrylate-based polymer, poly(butyl acrylate), was added and mixed therewith. The mixing ratio of the solid electrolyte and the binder was to be 98.7:1.3 by weight ratio.

The mixing was performed by using a Thinky mixer. The obtained mixture was added with 2 mm zirconia balls and was repeatedly mixed with the Thinky mixer to prepare a slurry. The slurry was casted on a release polytetrafluoroethylene film and dried at room temperature to prepare a solid electrolyte layer with a thickness of 100 µm.

### (3) Preparation of positive electrode

100 parts by weight of the LZO (Li-doped zinc oxide: Li₂O-ZrO₂)-coated positive active material LiNi_{0.9}Co_{0.05}Mn_{0.05}O₂, 17.6 parts by weight of an argyrodite-type solid electrolyte Li₆PS₅Cl, 3.53 parts by weight of a carbon nanofiber conductive material, and 1.76 parts by weight a polytetrafluoroethylene binder were mixed in an N-methyl pyrrolidone solvent to prepare a mixture. In the mixture, the weight ratio of the positive active material, the solid electrolyte, the conductive material and the binder was 85:15:3:1.5.

The mixture was coated on an aluminum foil current collector and vacuum-dried at 45 °C to prepare a positive electrode having a positive active material layer with a 160 µm thickness and a current collector with a 10 µm thickness. The positive active material layer had a thickness of 160 µm.

### (4) Preparation of all solid-state full cell

The resulting negative electrode, the solid electrolyte and the positive electrode as a counter electrode were sequentially stacked and were pressurized at a pressure of 4 Nm to fabricate a full cell.

### (Comparative Example 1)

The composite material based on carbon black and Ag nanoparticles has been prepared by the same procedure as in Example 1, except that the mixture was not heat treated, i.e. the Ag nanoparticle were not melted.

A negative electrode and a full cell were fabricated by the same procedure as in Example 1, except that the negative active material was used.

### Experimental Example 1) SEM image

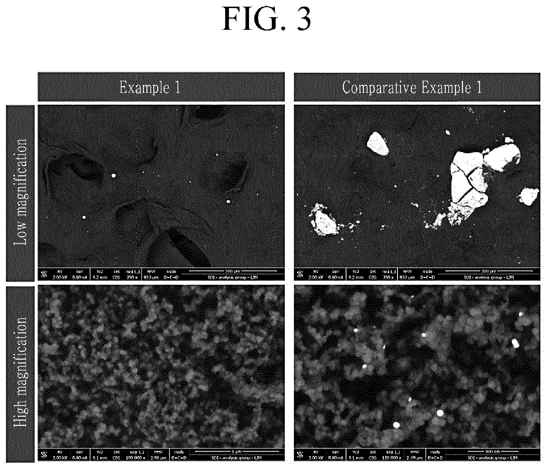

The SEM images for the negative active materials of Example 1 and Comparative Example 1 are shown in FIG. 3 with a low magnification (350X magnification) and high magnification (100,000 magnification).

As shown in FIG. 3, in the negative active material according to Example 1, silver was melted and distributed in the pores of the amorphous carbon, and thus was rarely detected on the surface. On the other hand, in the negative active material of Comparative Example 1, silver was detected on the surface of the negative active material (white areas in the SEMs are silver).

### Experimental Example 2) Evaluation of cycle-life characteristic and coulomb efficiency

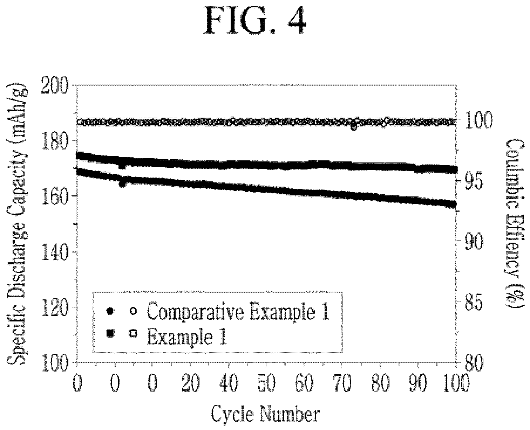

The all solid-state cells of Example 1 and Comparative Example 1 were charged and discharged at 0.33 C 100 times. The discharge capacity at each cycle were measured. The results are shown in FIG. 4. Furthermore, the coulomb efficiency which was ratio of the discharge capacity to the charge capacity was measured. The results are shown in FIG. 4.

In FIG. 4, the dot filled inside indicates discharge capacity and the dot with an empty inside indicates coulomb efficiency.

As shown in FIG. 4, the all solid-state cell of Example 1 exhibited slightly higher coulomb efficiency compared to Comparative Example 1, but exhibited higher discharge capacity than Comparative Example 1 after 100 cycles, and indicated high cycle-life characteristics.

### Experimental Example 3) Evaluation of rate-capability characteristic

The all solid-state cells of Example 1 and Comparative Example 1 were charged and discharged at 0.1 C once, 0.33 C once and 1 C once. The discharge capacity at each C-rate was measured. The results are shown in Table 1.

**Table 1**

| | Comparative Example 1 | Example 1 |
|---|---|---|
| 0.1 C (mAh/g) | 198.4 | 201.0 |
| 0.33 C (mAh/g) | 184.5 | 187.7 |
| 1 C (mAh/g) | 147.7 | 167.7 |

As shown in Table 1, the all solid-state cell of Example 1 exhibited better rate capability, particularly, high-rate capability than Comparative Example 1.

## Claims

1. A negative active material for an all solid-state battery, comprising:
an aggregated material of amorphous carbon having pores inside and in which primary particles of the amorphous carbon are aggregated; and
metal nanoparticles filled in the pores,
wherein the metal of the metal nanoparticles is selected from at least one of Ag, Au, Sn, Zn, Al, Mg, Ge, Cu, In, Ni, Bi, Pt, and Pd and
the amorphous carbon material is carbon black, acetylene black, denka black, ketjen black, furnace black, activated carbon, or a combination thereof.

2. The negative active material for an all solid-state battery of claim 1, wherein the metal of the metal nanoparticles is a precious metal selected from the group of Ag, Au, Pt, and Pd.

3. The negative active material for an all solid-state battery of one of the preceding claims, wherein the metal nanoparticles have an average particle size D50 of 5 nm to 80 nm measured by dynamic light scattering (DLS) which is performed according to ISO 22412.

4. The negative active material for an all solid-state battery of one of the preceding claims, wherein a mixing ratio of the aggregated material of amorphous carbon and the metal nanoparticles is 80:20 to 70:30 by weight ratio.

5. The negative active material for an all solid-state battery of claim 1, wherein the negative active material is an active material prepared by
a) mixing an aggregated material of amorphous carbon having pores inside and in which primary particles of the amorphous carbon are aggregated, with metal nanoparticles to prepare a mixture; and
b) heat-treating the mixture at a temperature at which the metal nanoparticles melt.

6. The negative active material for an all solid-state battery of claim 5, wherein the heat-treatment in step b) is performed at a temperature of 1000 °C or less.

7. An all solid-state battery (100), comprising:
a negative electrode including a negative current collector (50) and a negative electrode layer (40) on one side of the negative current collector (50);
a positive electrode; and
a solid electrolyte (30) between the negative electrode and the positive electrode,
wherein the negative electrode layer (40) includes the negative active material of claim 6.

8. The all solid-state battery of claim 7, wherein the solid electrolyte is a sulfide-based solid electrolyte.

9. The all solid-state battery of claim 8, wherein the solid electrolyte is LiₐM_{b}P_{c}S_{d}Aₑ (where a, b, c, d and e are all 0 or more and 12 or less, M is Ge, Sn, Si, or a combination thereof, and A is one of **F,** Cl, Br, or I).

10. The all solid-state battery of claim 7, wherein the negative electrode further includes a lithium deposition layer (60), after charging.

11. The all solid-state battery of claim 10, wherein the lithium deposition layer (60) has a thickness of 10 µm to 50 µm.

## Patentansprüche

1. Negatives Aktivmaterial für eine Festkörperbatterie, umfassend:
ein aggregiertes Material aus amorphem Kohlenstoff, das im Inneren Poren aufweist und in dem Primärpartikel des amorphen Kohlenstoffs aggregiert sind; und
Metallnanopartikel, die in die Poren gefüllt sind,
wobei das Metall der Metallnanopartikel aus mindestens einem von Ag, Au, Sn, Zn, Al, Mg, Ge, Cu, In, Ni, Bi, Pt und Pd ausgewählt ist, und
wobei das amorphe Kohlenstoffmaterial Industrieruß, Acetylenruß, Denka Black, Ketjen Black, Furnaceruß, Aktivkohle oder eine Kombination daraus ist.

2. Negatives Aktivmaterial für eine Festkörperbatterie nach Anspruch 1, wobei das Metall der Metallnanopartikel ein Edelmetall ist, das ausgewählt ist aus der Gruppe aus Ag, Au, Pt und Pd.

3. Negatives Aktivmaterial für eine Festkörperbatterie nach einem der vorhergehenden Ansprüche, wobei die Metallnanopartikel eine mittlere Partikelgröße D50 von 5 nm bis 80 nm aufweisen, gemessen durch dynamische Lichtstreuung (DLS), die gemäß ISO 22412 durchgeführt wird.

4. Negatives Aktivmaterial für eine Festkörperbatterie nach einem der vorhergehenden Ansprüche, wobei ein Mischungsverhältnis des aggregierten Materials aus amorphem Kohlenstoff und der Metallnanopartikel 80:20 bis 70:30 nach Gewichtsverhältnis beträgt.

5. Negatives Aktivmaterial für eine Festkörperbatterie nach Anspruch 1, wobei das negative Aktivmaterial ein Aktivmaterial ist, das hergestellt wird durch
a) Mischen eines aggregierten Materials aus amorphem Kohlenstoff, das im Inneren Poren aufweist und in dem Primärpartikel des amorphen Kohlenstoffs aggregiert sind, mit Metallnanopartikeln, um ein Gemisch herzustellen; und
b) Behandeln des Gemisches mit Wärme bei einer Temperatur, bei der die Metallnanopartikel schmelzen.

6. Negatives Aktivmaterial für eine Festkörperbatterie nach Anspruch 5, wobei die Wärmebehandlung in Schritt b) bei einer Temperatur von 1000 °C oder weniger durchgeführt wird.

7. Festkörperbatterie (100), umfassend:
eine negative Elektrode, die einen negativen Stromkollektor (50) und eine Schicht (40) der negativen Elektrode auf einer Seite des negativen Stromkollektors (50) beinhaltet;
eine positive Elektrode; und
einen Festelektrolyten (30) zwischen der negativen Elektrode und der positiven Elektrode,
wobei die Schicht (40) der negativen Elektrode das negative Aktivmaterial nach Anspruch 6 beinhaltet.

8. Festkörperbatterie nach Anspruch 7, wobei der Festelektrolyt ein sulfidbasierter Festelektrolyt ist.

9. Festkörperbatterie nach Anspruch 8, wobei der Festelektrolyt LiₐM_{b}P_{c}S_{d}Aₑ ist (wobei a, b, c, d und e alle 0 oder mehr und 12 oder weniger betragen, M für Ge, Sn, Si oder eine Kombination daraus steht und A für eines von F, Cl, Br oder I steht).

10. Festkörperbatterie nach Anspruch 7, wobei die negative Elektrode nach dem Laden ferner eine Lithium-Abscheidungsschicht (60) beinhaltet.

11. Festkörperbatterie nach Anspruch 10, wobei die Lithium-Abscheidungsschicht (60) eine Dicke von 10 µm bis 50 µm aufweist.

## Revendications

1. Matériau actif négatif pour une batterie tout solide, comportant :
un matériau agrégé de carbone amorphe ayant des pores à l'intérieur et dans lequel des particules primaires du carbone amorphe sont agrégées ; et
des nanoparticules métalliques remplissant les pores,
dans lequel le métal des nanoparticules métalliques est sélectionné parmi au moins l'un parmi Ag, Au, Sn, Zn, AI, Mg, Ge, Cu, In, Ni, Bi, Pt, et Pd et
le matériau de carbone amorphe est le noir de carbone, le noir d'acétylène, le noir denka, le noir ketjen, le noir de fourneau, le charbon actif, ou une combinaison de ceux-ci.

2. Matériau actif négatif pour une batterie tout solide selon la revendication 1, dans lequel le métal des nanoparticules métalliques est un métal précieux sélectionné parmi le groupe de Ag, Au, Pt et Pd.

3. Matériau actif négatif pour une batterie tout solide selon l'une des revendications précédentes, dans lequel les nanoparticules métalliques possèdent une granulométrie moyenne D50 de 5 nm à 80 nm mesurée par diffusion dynamique de lumière (DLS) qui est réalisée selon la norme ISO 22412.

4. Matériau actif négatif pour une batterie tout solide selon l'une des revendications précédentes, dans lequel un rapport de mélange du matériau agrégé de carbone amorphe et des nanoparticules métalliques est de 80:20 à 70:30 en rapport en poids.

5. Matériau actif négatif pour une batterie tout solide selon la revendication 1, dans lequel le matériau actif négatif est un matériau actif préparé par
a) le mélange d'un matériau agrégé de carbone amorphe ayant des pores à l'intérieur et dans lequel des particules primaires du carbone amorphe sont agrégées, avec des nanoparticules métalliques pour préparer un mélange ; et
b) le traitement thermique du mélange à une température à laquelle les nanoparticules métalliques fondent.

6. Matériau actif négatif pour une batterie tout solide selon la revendication 5, dans lequel le traitement thermique à l'étape b) est réalisé à une température de 1 000 °C ou moins.

7. Batterie tout solide (100), comportant :
une électrode négative incluant un collecteur de courant négatif (50) et une couche d'électrode négative (40) sur un côté du collecteur de courant négatif (50) ;
une électrode positive ; et
un électrolyte solide (30) entre l'électrode négative et l'électrode positive,
dans laquelle la couche d'électrode négative (40) inclut le matériau actif négatif selon la revendication 6.

8. Batterie tout solide selon la revendication 7, dans laquelle l'électrolyte solide est un électrolyte solide à base de sulfure.

9. Batterie tout solide selon la revendication 8, dans laquelle l'électrolyte solide est LiₐM_{b}P_{c}S_{d}Aₑ (où a, b, c, d et e valent tous 0 ou plus et 12 ou moins, M est Ge, Sn, Si, ou une combinaison de ceux-ci, et A est l'un parmi F, Cl, Br ou I).

10. Batterie tout solide selon la revendication 7, dans laquelle l'électrode négative inclut en outre une couche de dépôt de lithium (60), après charge.

11. Batterie tout solide selon la revendication 10, dans laquelle la couche de dépôt de lithium (60) possède une épaisseur de 10 µm à 50 µm.
